# EUROPÄISCHE PATENTANMELDUNG

(11) **EP 2 866 335 A2**
(43) Veröffentlichungstag der Anmeldung: **29.04.2015**
(21) Anmeldenummer: 14178941.2
(22) Anmeldetag: 29.07.2014
(51) Int. Cl.: H02K 17/16, H02K 15/00

(54) **Rotor mit Sicherungsringen für eine Asynchronmaschine sowie Verfahren zum Fertigen derselben**

(30) Priorität: 28.10.2013 DE 102013221795
(71) Anmelder: ROBERT BOSCH GMBH, 70442 Stuttgart (DE)
(72) Erfinder: Ploeger, Armin, 31139 Hildesheim (DE); Kirchhoff, Karsten, 31196 Sehlem (DE)

(57) **Zusammenfassung**

Es wird ein Rotor (1) für eine Asynchronmaschine sowie ein Verfahren zum Fertigen desselben beschrieben. Der Rotor weist einen zylindrischen Rotorgrundkörper (3), einen Kurzschlusskäfig mit einer Mehrzahl von Metallstäben (19) und zwei Kurzschlussringen (21) sowie zwei Sicherungsringe (23) auf. Die Sicherungsringe (23) sind jeweils als Ringscheiben (27) mit einem in Axialrichtung abragenden Rand (25) derart ausgebildet und angeordnet, dass eine Ringscheibe (27) des Sicherungsrings (23) zwischen einen der Kurzschlussringe (21) und den Rotorgrundkörper (3) zwischengelagert ist. Der Rand der Ringscheibe (27) ragt derart ab, dass er den Kurzschlussring (21) entlang dessen Umfang eng umschließt. Ein solcher Sicherungsring kann beim Gießen des Kurzschlusskäfigs (17) mit eingegossen werden.

## Beschreibung

### Gebiet der Erfindung

Die vorliegende Erfindung betrifft einen Rotor für eine Asynchronmaschine sowie ein Verfahren zum Fertigen eines solchen Rotors.

### Stand der Technik

Elektrische Maschinen in Form von Asynchronmaschinen werden beispielsweise als Motoren oder Generatoren insbesondere aufgrund ihrer Robustheit und Zuverlässigkeit für eine Vielzahl industrieller Anwendungen eingesetzt. Derzeit werden Asynchronmaschinen insbesondere für einen Einsatz bei Elektro- oder Hybridfahrzeugen weiter entwickelt. Vorteilhaft ist hierbei, dass Elektromaschinen keine in einen Rotor einzusetzenden Permanentmagnete benötigen und somit auf die hierfür häufig verwendeten, sehr teuren Seltene-Erden-Permanentmagnete verzichtet werden kann. Stattdessen weisen Asynchronmaschinen in ihrem Rotor einen so genannten Kurzschlusskäfig auf.

Bei einer Asynchronmaschine mit einem Kurzschlusskäfig wird auf den in einem Stator drehbar aufgenommenen Rotor dadurch ein Drehmoment ausgeübt und dieser in Rotation versetzt, dass zwischen einer Rotationsgeschwindigkeit des Rotors und einer Winkelgeschwindigkeit eines von außen angelegten rotierenden Magnetfeldes eine Differenz derart bewirkt wird, dass Ströme, insbesondere Wirbelströme, in einem elektrischen Leiter des Kurzschlusskäfigs des Rotors induziert werden. Diese Ströme bewirken in dem Rotor magnetische Felder, die mit dem vom Stator erzeugten magnetischen Feld wechselwirken, so dass das gewünschte Drehmoment erzeugt wird.

Es ist hierbei wichtig, dass die in dem Kurzschlusskäfig des Rotors induzierten Ströme in dem Kurzschlusskäfig einen möglichst geringen elektrischen Widerstand erfahren, um Verluste beim Umsetzen von elektrischer in mechanische Energie beziehungsweise umgekehrt gering halten zu können. Neben einer Wirkungsgradminderung durch solche Verluste für die Asynchronmaschine, kann es ansonsten auch zu einer starken Erwärmung der Komponenten der Asynchronmaschine kommen, so dass diese Komponenten entweder gezielt gekühlt werden müssen oder die Leistungsabgabe der Asynchronmaschine begrenzt werden muss.

Heute im industriellen Einsatz verwendete Asynchronmaschinen besitzen meist einen Kurzschlusskäfig aus Aluminium oder Kupfer, der aus mehreren Teilen aufgebaut und verbunden ist oder der einstückig gegossen wird. Um bei zukünftigen Asynchronmaschinen auf sehr kleinem Bauraum sehr hohe Leistungsdichten erzeugen zu können, wird angestrebt, den Kurzschlusskäfig aus sehr gut elektrisch leitfähigen Materialien wie zum Beispiel Kupfer oder Kupferlegierungen auszubilden. Ferner wird angestrebt, den Rotor solcher Asynchronmaschinen mit sehr hohen Drehzahlen rotieren zu lassen. Durch solche hohen Drehzahlen können jedoch sehr große Zentrifugalkräfte auf rotierende Komponenten der Asynchronmaschine, insbesondere auf deren Kurzschlussringe, wirken. Eine mechanische Festigkeit von aus elektrischer Sicht vorteilhaft einzusetzendem Kupfer beziehungsweise Kupferlegierungen oder auch bestimmten Aluminiumlegierungen kann solchen hohen Zentrifugalkräften nicht gewachsen sein, so dass die Kurzschlussringe des Rotors während des Betriebs der Asynchronmaschine geschädigt werden können.

Um eine Integrität einer Asynchronmaschine auch bei zu erreichenden sehr hohen Drehzahlen sicher stellen zu können, wurde vorgeschlagen, um einen Kurzschlussring herum einen Sicherungs- oder Verschlussring aus einem hochfesten Material anzuordnen. In der DE 10 2009 034 647 A1 wird beispielsweise ein Verfahren zum Herstellen eines Käfigläufers beschrieben, bei dem Komponenten eines Kurzschlusskäfigs einer Asynchronmaschine durch gießen einer Metallschmelze hergestellt werden. In der DE 10 2012 212 416 A1 wird ein Verfahren zum Herstellen eines Rotors eines Induktionsmotors beschrieben, bei dem ein Kurzschlussendring an einer Rotorkernanordnung durch einen Verschlussring befestigt wird, der in einem thermisch ausgedehnten Zustand am Rotorkern montiert wird, wenn sich dieser in einem thermisch zusammengezogenen Zustand befindet.

Allerdings ist ein Aufpressen oder Aufschrumpfen von Sicherungs- oder Verschlussringen auf Komponenten eines Rotors einer Asynchronmaschine aufwändig und mit zusätzlichen Kosten verbunden.

### Offenbarung der Erfindung

Ausführungsformen der vorliegenden Erfindung ermöglichen in vorteilhafter Weise einen Rotor für eine Asynchronmaschine, der einerseits einfach und kostengünstig hergestellt werden kann und der andererseits auch bei hohen Drehzahlen betrieben werden kann.

Gemäß einem Aspekt der vorliegenden Erfindung wird ein Rotor für eine Asynchronmaschine beschrieben, der einen zylindrischen Rotorgrundkörper, eine Mehrzahl von Metallstäben, zwei Kurzschlussringe sowie zwei Sicherungsringe aufweist. Die Metallstäbe sind in Ausnehmungen in dem Rotorgrundkörper nahe eines Außenumfangs desselben und parallel zur Längsachse des Rotorgrundkörper angeordnet. Die Kurzschlussringe sind an gegenüberliegenden Stirnenden des Rotorgrundkörpers angeordnet und mit den Metallstäben elektrisch leitfähig verbunden. Jeder der Sicherungsringe umschließt einen zugehörigen Kurzschlussring. Der Rotor zeichnet sich dadurch aus, dass die Sicherungsringe jeweils als Ringscheiben mit einem in Axialrichtung abragenden Rand derart ausgebildet und angeordnet sind, dass eine Ringscheibe eines Sicherungsrings zwischen einen der Kurzschlussringe und den Rotorgrundkörper zwischengelagert ist, wobei sich die Metallstäbe durch zugehörige Ausnehmungen in der Ringscheibe erstrecken, und wobei der Rand derart von der Ringscheibe abragt, dass er den Kurzschlussring entlang dessen Umfang eng anliegend umschließt. Auf diese Weise sind die Kurzschlussringe jeweils topfförmig ausgeführt.

Gemäß einem zweiten Aspekt der Erfindung wird ein Verfahren zum Fertigen eines Rotors für eine Asynchronmaschine beschrieben. Zunächst wird ein zylindrischer Rotorgrundkörper bereit gestellt. Der Rotorgrundkörper weist nahe eines Außenumfangs, d.h. nahe seiner Mantelfläche, darin ausgebildete, sich parallel zur Längsachse des Rotorgrundkörpers angeordnete Ausnehmungen auf. Anschließend wird jeweils ein Sicherungsring an jede der Stirnflächen des Rotorgrundkörpers angelagert. Der Sicherungsring ist dabei als Ringscheibe mit einem in Axialrichtung weg von dem Rotorgrundkörper abragenden Rand ausgebildet. Ferner sind in der Ringscheibe des Sicherungsrings Ausnehmungen ausgebildet. Abschließend werden zumindest die Sicherungsringe, möglicherweise aber auch ein gesamter Kurzschlusskäfig durch ein Metallgussverfahren ausgebildet. Der Kurzschlusskäfig weist hierbei eine Mehrzahl von Metallstäben, die sich durch die Ausnehmungen in dem Rotorgrundkörper und in den Sicherungsringen erstrecken, und zwei Kurzschlussringe jeweils an Stirnenden des Rotorgrundkörpers angrenzend an einen der Sicherungsringe auf.

Ideen und Gedanken zu Ausführungsformen der vorliegenden Erfindung können unter anderem als auf den nachfolgend beschriebenen Erkenntnissen und Überlegungen beruhend angesehen werden.

Wie einleitend ausgeführt werden herkömmlich bei der Herstellung von Kurzschlusskäfigen für Asynchronmaschinen die Kurzschlussringe an den Stirnflächen eines Rotorgrundkörpers typischerweise ausgebildet, indem beispielsweise der gesamte Kurzschlusskäfig einschließlich der Kurzschlussringe einstückig gegossen wird, und erst anschließend wird ein den Kurzschlussring umschließender Sicherungsring um den Kurzschlussring herum angeordnet, beispielsweise durch Aufpressen oder Aufschrumpfen. Der Sicherungsring ist dabei an dem Kurzschlussring im Allgemeinen lediglich kraftschlüssig fixiert. Um den Sicherungsring auf den Kurzschlussring aufzubringen, sind hierfür regelmäßig aufwändige und somit teure Werkzeuge notwendig, um beispielsweise eine nötige Aufpresskraft ausüben zu können beziehungsweise um den Sicherungsring auf eine wesentlich höhere Temperatur zu erhitzen als den Kurzschlussring, um den Sicherungsring kurzzeitig relativ zu dem Kurzschlussring thermisch zu weiten. Bei diesem herkömmlichen Ansatz ist der Sicherungsring lediglich als zylindrische Hülse ausgebildet und ein Kraftschluss wirkt lediglich zwischen einer Innenoberfläche des Sicherungsrings und einer umfänglichen Außenoberfläche des Kurzschlussrings.

Statt einen zylindrischen Sicherungsring erst nachträglich aufzubringen, wird nun vorgeschlagen, den Sicherungsring mit einer anderen als einer rein zylindrischen Geometrie auszubilden und somit zu ermöglichen, dass der Sicherungsring bereits vor Ausbilden des Kurzschlussrings an dem Rotorgrundkörper angeordnet werden kann. Der Sicherungsring ist hierzu als eine Ringscheibe, das heißt mit einer Geometrie ähnlich einer Unterlegscheibe, ausgebildet. In der Ringscheibe sind Ausnehmungen vorgesehen, die den in dem Rotorgrundkörper vorgesehenen Ausnehmungen zur Aufnahme der Metallstäbe geometrisch im Wesentlichen entsprechen können. Die Ringscheibe kann somit im Wesentlichen eine gleiche Form aufweisen wie eine Stirnfläche des Rotorgrundkörpers. Um den Rotor zu Fertigen, kann eine solche Sicherungsscheibe jeweils an beiden Stirnflächen des Rotorgrundkörpers angeordnet werden und anschließend der Kurzschlusskäfig einschließlich der ebenfalls an den Stirnflächen vorzusehenden Kurzschlussringe durch ein Metallgussverfahren gegossen werden. In einem derart gefertigten Rotor ist somit der Sicherungsring mit einem durch die Ringscheibe gebildeten Teil zwischen den Rotorgrundkörper und den Kurzschlussring an der Stirnfläche des Rotorgrundkörpers zwischengelagert.

Zusätzlich zu der Ringscheibe weist der Sicherungsring auch einen in Axialrichtung abragenden Rand auf. Im fertigen Rotor umschließt dieser Rand den radial weiter innen aufgenommenen Kurzschlussring und kann diesen somit bei auftretenden hohen Zentrifugalkräften stabilisieren.

Die Sicherungsringe können vorzugsweise aus einem Material gebildet sein, das eine höhere mechanische Festigkeit aufweist als ein Material, aus dem die Kurzschlussringe ausgebildet sind. Beispielsweise können die Kurzschlussringe aus einem elektrisch sehr gut leitfähigen, aber mechanisch nicht sehr belastbaren Material wie zum Beispiel Kupfer oder einer Kupferlegierung bestehen. Um den wenig belastbaren Kurzschlussring bei auftretenden hohen Zentrifugalkräften stabilisieren zu können, kann der Sicherungsring und insbesondere dessen den Kurzschlussring umfänglich umschließender Rand aus einem mechanisch sehr stabilen Material wie zum Beispiel hochfestem Stahl ausgebildet sein, insbesondere austenitischem Chrom-Nickel-Stahl, kaltumgeformt, lösungsgeglüht und bei ca. 1100°C und schnell abgekühlt. Solche Materialien sind vorzugsweise dehnbar, korrosionsbeständig und unmagnetisch.

Insbesondere können die Sicherungsringe aus einem magnetisch nicht leitfähigen Material ausgebildet sein. Mit anderen Worten können zur Bildung des Sicherungsrings diamagnetische oder paramagnetische Materialien, vorzugsweise jedoch nicht ferromagnetische Materialien eingesetzt werden. Hierdurch kann eine Beeinflussung des Rotormagnetfelds vermieden werden.

Die Sicherungsringe können vorzugsweise einstückig ausgebildet sein. Beispielsweise können die Sicherungsringe als Stanzbiegeteile ausgebildet sein. Eine solche einstückige Ausbildung, insbesondere als Stanzbiegeteile, ermöglicht eine einfache und kostengünstige Herstellung der Sicherungsringe. Beispielsweise kann ein Sicherungsring aus einer Platte zunächst mit einer zylindrischen Geometrie in Form der Ringscheibe ausgestanzt werden und dann ein umlaufender Rand aus der Ebene der Ringscheibe heraus umgebogen werden.

Der vorgeschlagene Aufbau des Rotors beziehungsweise das vorgeschlagene Verfahren zum Fertigen desselben kann insbesondere für Rotoren vorteilhaft sein, bei denen die Metallstäbe und die beiden Kurzschlussringe als einstückig gegossener Kurzschlusskäfig ausgebildet sind. Ein einstückiges Gießen eines gesamten Kurzschlusskäfigs kann insbesondere dahingehend vorteilhaft sein, dass nicht einzelne Komponenten des Kurzschlusskäfigs wie zum Beispiel vorgefertigte Metallstäbe und vorgefertigte Kurzschlussringe nachträglich zusammengefügt werden brauchen, sondern alle Komponenten des Kurzschlusskäfigs in einem gemeinsamen Gießvorgang erzeugt werden können. Bei dem hierin vorgeschlagenen Rotoraufbau kann dabei jeder der zuvor an den Stirnflächen des Rotorgrundkörpers angeordneten Sicherungsringe während des Gießens als Teil einer Gießform wirken und somit mit eingegossen werden, so dass die Sicherungsringe beim fertigen Rotor zwischen dem Kurzschlusskäfig und dem Rotorgrundkörper eingegossen sind.

Der Rotorgrundkörper kann, wie bei Asynchronmaschinen häufig der Fall, aus einer Vielzahl hintereinander gestapelter Blechlamellen zusammengesetzt sein. Die einzelnen Blechlamellen bestehen dabei meist aus einem ferromagnetischen Metall und werden beispielsweise durch Stanzprozesse in Form gebracht und insbesondere mit den Ausnehmungen für die Aufnahme der Metallstäbe versehen. Insbesondere um Wirbelströme vermeiden zu können, weisen diese meist eine geringe Dicke von beispielsweise weniger als 1mm auf. Die Ringscheibe des Sicherungsrings des vorgeschlagenen Rotors soll vorteilhafterweise eine in Axialrichtung größere Dicke aufweisen, als solche Blechlamellen. Beispielsweise kann eine solche Ringscheibe eine Dicke im Bereich von 1 bis 3mm aufweisen und somit nicht nur wegen der Verwendung eines festeren Materials sondern auch wegen einer größeren Materialstärke eine höhere mechanische Festigkeit haben, als die Blechlamellen des Rotorgrundkörpers. Da die Sicherungsringe vorzugsweise einstückig durch Stanzbiegeprozesse gebildet werden, hat vorzugsweise nicht nur die Ringscheibe sondern auch der hiervon abstehende Rand eine entsprechend große Dicke und kann für eine gute mechanische Stabilisierung der von diesem umschlossenen Kurzschlussringe sorgen.

Vorteile von Ausführungsformen des hierin beschriebenen Rotors beziehungsweise des Verfahrens zum Fertigen desselben sind unter anderem eine einfache Herstellbarkeit der Sicherungsringe, beispielsweise als Stanzbiegeteile, sowie eine einfache Fertigbarkeit des gesamten Rotors, in dem solche Sicherungsringe beim Gießen eines Kurzschlusskäfigs mit eingegossen werden.

Ferner können Herstellungstoleranzen beim Fertigen der Sicherungsringe weit gehalten werden, im Gegensatz zu den engen Toleranzgrenzen, die eingehalten werden müssen, wenn ein herkömmlicher zylindrischer Sicherungsring auf einen Kurzschlussring aufgepresst werden soll.

Auch entstehen keine zusätzlichen Kosten für Werkzeuge und Energie zum Erwärmen des Sicherungsrings, wie dies der Fall ist, wenn herkömmliche Sicherungsringe thermisch aufgeschrumpft werden sollen.

Ein weiterer Vorteil kann darin gesehen werden, dass die an den Stirnflächen des Rotorgrundkörpers vorgesehenen Sicherungsringe zum Beispiel während eines Gießens eines Kurzschlusskäfigs als mechanischer und thermischer Schutz für den Rotorgrundkörper und insbesondere für dessen äußerste Blechlamellen dienen kann. Beim herkömmlichen Gießen eines Kurzschlusskäfigs kommt eine heiße Metallschmelze wie beispielsweise eine über 1000°C heiße Kupferschmelze in direkten Kontakt mit den äußeren, Anguss-seitigen Lamellenbleche des Rotorgrundkörpers. Diese dünnen Elektrobleche können sich aufgrund der auftretenden hohen Temperaturen und Drücke deformieren. Dies kann bei dem hier vorgeschlagenen Rotoraufbau und den hierzu vorgesehenen Fertigungsverfahren vermieden werden, indem die Sicherungsringe mit ihrer Ringscheibe angrenzend an die Stirnflächen des Rotorgrundkörpers angelagert werden, bevor der Kurzschlusskäfig gegossen wird.

Es wird darauf hingewiesen, dass mögliche Merkmale und Vorteile von Ausführungsformen der Erfindung hierin teilweise mit Bezug auf einen erfindungsgemäßen Rotor und teilweise mit Bezug auf ein erfindungsgemäßes Verfahren zum Fertigen eines solchen Rotors beschrieben sind. Ein Fachmann wird erkennen, dass die beschriebenen Merkmale in geeigneter Weise kombiniert oder ausgetauscht und von dem Rotor auf das Verfahren beziehungsweise umgekehrt übertragen werden können, um zu weiteren Ausführungsformen und Synergieeffekten gelangen zu können.

### Kurze Beschreibung der Zeichnungen

Nachfolgend werden Ausführungsformen der Erfindung unter Bezugnahme auf die beigefügten Zeichnungen beschrieben, wobei weder die Beschreibung noch die Zeichnungen als die Erfindung beschränkend auszulegen sind.
Figur 1 zeigt einen Querschnitt durch einen herkömmlichen Rotor für eine Asynchronmaschine.
Figur 2 zeigt eine Draufsicht auf einen Rotorgrundkörper.
Figur 3 zeigt einen Querschnitt durch einen erfindungsgemäßen Rotor entlang der Linie A-A aus Figur 2.
Figur 4 zeigt einen Querschnitt durch einen erfindungsgemäßen Rotor entlang der Linie B-B aus Figur 2.

Die Figuren sind lediglich schematisch und nicht maßstabsgetreu. Gleiche Bezugszeichen bezeichnen in den Figuren gleiche beziehungsweise gleich wirkende Merkmale.

### Ausführungsformen der Erfindung

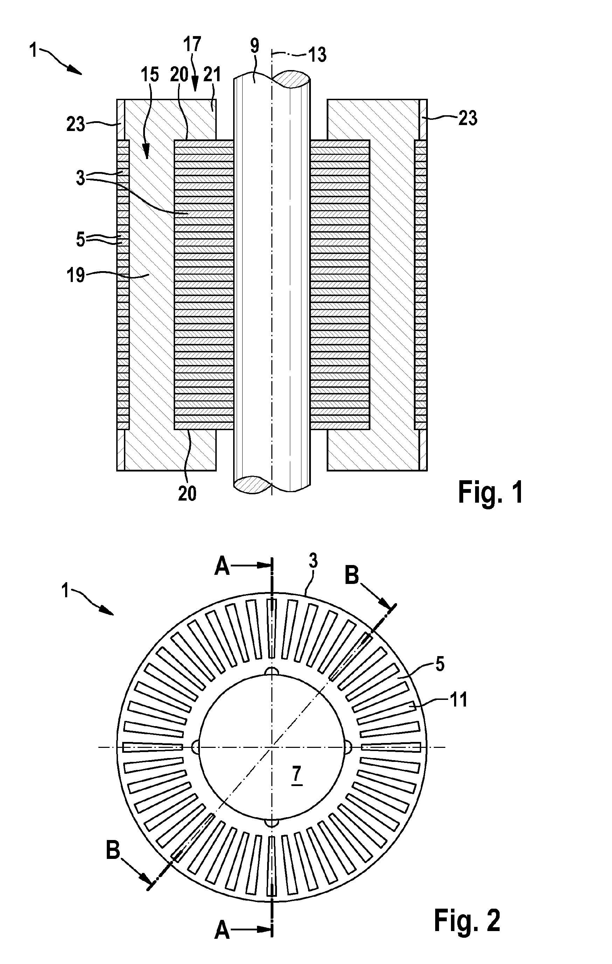

Figur 1 zeigt einen Querschnitt durch einen Rotor 1 für eine Asynchronmaschine. Figur 2 zeigt eine Draufsicht auf einen Rotorgrundkörper 3 eines solchen Rotors 1.

Der herkömmliche Rotor 1 weist einen zylindrischen Rotorgrundkörper 3 auf, der aus einer Vielzahl übereinander gestapelter Blechlamellen 5 zusammengesetzt ist. Jede der Blechlamellen 5 ist aus einem ferromagnetischen Metallblech ausgestanzt. Im Zentrum der Lamelle 5 ist dabei ein zylindrischer Bereich 7 freigestanzt, in den eine Welle 9 des Rotors eingesetzt werden kann. Ferner sind in den hohlzylindrischen Blechlamellen 5 eine Vielzahl von länglichen Ausstanzungen 11 vorgesehen, die nahe eines Außenumfangs der Blechlamellen 5 angeordnet sind und voneinander entlang des Außenumfangs beabstandet sind. Die Vielzahl von Blechlamellen 5 ist derart übereinander gestapelt, dass die Ausstanzungen 11 miteinander fluchten und in dem gestapelten Rotorgrundkörper 3 parallel zu dessen Längsachse verlaufende Ausnehmungen 15 bilden.

An dem derart gebildeten Rotorgrundkörper 3 wird ein Kurzschlusskäfig 17 ausgebildet. Der Kurzschlusskäfig 17 weist eine Vielzahl von Metallstäben 19 auf, die sich durch die Ausnehmungen 15 erstrecken. An den Stirnflächen 20 des Rotorgrundkörpers 3 weist der Kurzschlusskäfig 17 ferner Kurzschlussringe 21 auf. Diese Kurzschlussringe 21 verbinden die Vielzahl von Metallstäben 19 elektrisch leitend miteinander, so dass in dem gesamten Kurzschlusskäfig 17 Wirbelströme fließen können. Der Kurzschlusskäfig 17 wird beispielsweise einstückig mithilfe eines Metallgussvorgangs gebildet, wobei eine flüssige Metallschmelze, beispielsweise aus Kupfer oder einer Kupferlegierung, in die Ausnehmungen 15 eingefüllt wird und dabei gleichzeitig mithilfe von geeigneten Gussformen auch die Kurzschlussringe 21 ausgebildet werden.

Um die aus weichem Metall bestehenden Kurzschlussringe 21 gegen Verformung durch hohe Zentrifugalkräfte zu schützen, wird abschließend ein Sicherungsring 23 radial umfänglich auf jeden der beiden Kurzschlussringe 21 aufgepresst oder thermisch aufgeschrumpft.

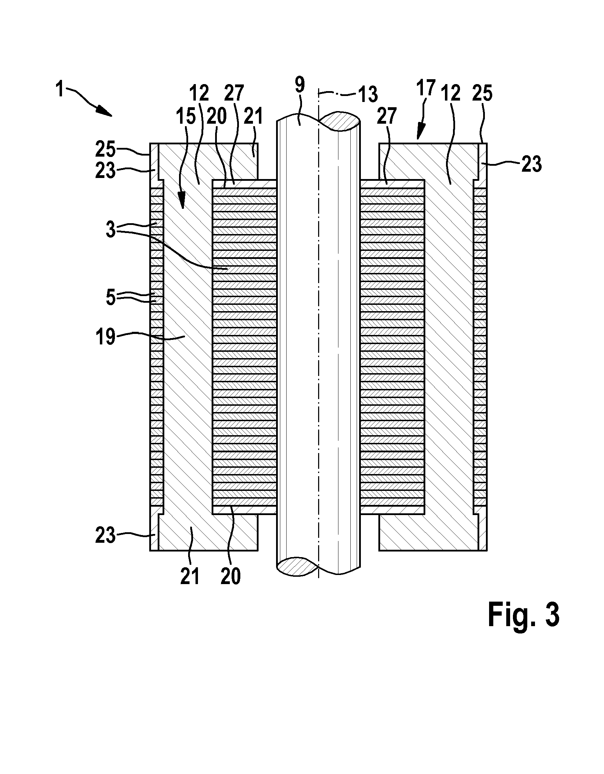

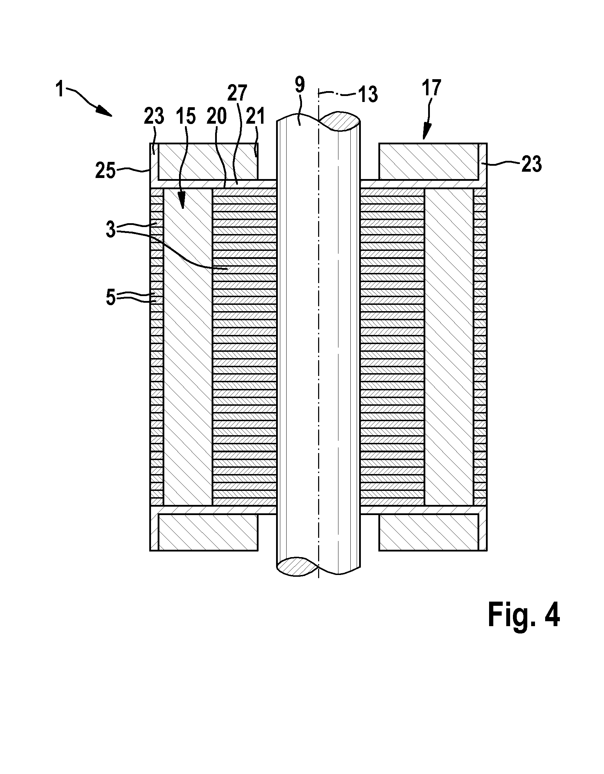

Mit Bezug auf die Figuren 3 und 4 wird nun ein Rotor 1 gemäß einer Ausführungsform der vorliegenden Erfindung hinsichtlich seiner Struktur sowie hinsichtlich eines Verfahrens zu dessen Fertigung beschrieben. Figur 3 zeigt dabei einen Schnitt entlang der Linie A-A aus Figur 2, wohingegen Figur 4 einen Schnitt entlang der Linie B-B zeigt.

Der Rotor 1 weist einen Rotorgrundkörper 3 auf, der dem Rotorgrundkörper 3 herkömmlicher Rotoren entsprechen kann.

Bevor der Kurzschlusskäfig 17 mit seinen Metallstäben 19 und den Kurzschlussringen 21 ausgebildet wird, werden an die Stirnflächen 20 des Rotorgrundkörpers 3 speziell geformte Sicherungsringe 23 angelagert. Die Sicherungsringe 23 weisen dabei jeweils eine Ringscheibe 27 auf, von der in axialer Richtung, das heißt parallel zu der Achse 13, ein Rand 25 weg von dem Rotorgrundkörper 3 abragt. Ein Sicherungsring 23 weist dabei im Wesentlichen die gleiche Geometrie in Draufsicht auf, wie die Lamellen 5 des Rotorgrundkörpers 3. Insbesondere verfügt der Sicherungsring 23 über Ausnehmungen 12, die im Wesentlichen eine gleiche Form aufweisen wie die Ausstanzungen 11 in den Lamellen 5 des Rotorgrundkörpers 3. Die Sicherungsringe 23 sind dabei an dem Rotorgrundkörper 3 derart positioniert, dass ihre Ausnehmungen 12 mit den durch die Ausstanzungen 11 gebildeten Ausnehmungen 19 des Rotorgrundkörpers 3 fluchten.

Die Sicherungsscheiben 23 sind aus einem hochfesten und vorzugsweise magnetisch nicht leitfähigen Material, welches außerdem vorzugsweise auch hohen Temperaturen beispielsweise im Bereich von 1000°C widerstehen kann, ausgebildet. Beispielsweise können die Sicherungsringe 23 aus hochfestem Stahl ausgebildet sein und als Stanzbiegeteile gefertigt werden. Eine Materialstärke der Sicherungsringe 23 kann dabei dicker sein als eine Dicke der Lamellen 5 des Rotorgrundkörpers 3.

Nachdem derartige Sicherungsringe 23 an den Stirnflächen 20 des Rotorgrundkörpers 3 angelagert wurden, kann der Kurzschlusskäfig 17 durch ein Metallgussverfahren gebildet werden. Dabei können die Sicherungsringe 23 einen Teil einer formgebenden Gussform bilden. Insbesondere können die Ränder 25 der Sicherungsringe 23 einen Bereich umschließen, in dem die Kurzschlussringe 21 beim Gießen ausgebildet werden und somit die fertigen Kurzschlussringe eng anliegende umschließen. Ferner können die Sicherungsringe 23 außen liegende Blechlamellen 5 des Rotorgrundkörpers 3 vor einem direkten flächigen Kontakt mit einer flüssigen Metallschmelze und somit vor daraus resultierenden Beschädigungen schützen.

## Patentansprüche

1. Rotor (1) für eine Asynchronmaschine, aufweisend:
einen zylindrischen Rotorgrundkörper (3);
eine Mehrzahl von Metallstäben (19);
zwei Kurzschlussringe (21); und
zwei Sicherungsringe (23);
wobei die Metallstäbe (19) in Ausnehmungen (15) in dem Rotorgrundkörper (3) nahe eines Außenumfangs des Rotorgrundkörpers (3) und parallel zur Längsachse (13) des Rotorgrundkörpers (3) angeordnet sind;
wobei die Kurzschlussringe (21) an gegenüberliegenden Stirnenden (20) des Rotorgrundkörpers (3) angeordnet sind und mit den Metallstäben (19) elektrisch leitfähig verbunden sind; und
wobei jeder der Sicherungsringe (23) einen zugehörigen Kurzschlussring (21) umschließt;
**dadurch gekennzeichnet, dass**
die Sicherungsringe (23) jeweils als Ringscheiben (27) mit einem in Axialrichtung abragenden Rand (25) derart ausgebildet und angeordnet sind, dass eine Ringscheibe (27) eines Sicherungsrings (23) zwischen einen der Kurzschlussringe (21) und den Rotorgrundkörper (3) zwischengelagert ist, wobei sich die Metallstäbe (19) durch zugehörige Ausnehmungen (12) in der Ringscheibe (27) erstrecken, und der Rand (25) derart von der Ringscheibe (27) abragt, dass er den Kurzschlussring (21) entlang dessen Umfang eng anliegend umschließt.

2. Rotor nach Anspruch 1, wobei die Sicherungsringe (23) aus einem Material gebildet sind, dass eine höhere mechanische Festigkeit aufweist als ein Material, aus dem die Kurzschlussringe (21) ausgebildet sind.

3. Rotor nach Anspruch 1 oder 2, wobei die Sicherungsringe (23) aus einem magnetisch nicht leitfähigen Material ausgebildet sind.

4. Rotor nach einem der Ansprüche 1 bis 3, wobei die Sicherungsringe (23) einstückig ausgebildet sind.

5. Rotor nach einem der Ansprüche 1 bis 4, wobei die Sicherungsringe (23) als Stanzbiegeteile ausgebildet sind.

6. Rotor nach einem der Ansprüche 1 bis 5, wobei die Metallstäbe (19) und die beiden Kurzschlussringe (21) als einstückig gegossener Kurzschlusskäfig (17) ausgebildet sind.

7. Rotor nach einem der Ansprüche 1 bis 6, wobei der Rotorgrundkörper (3) aus einer Vielzahl hintereinander gestapelter Blechlamellen (5) zusammengesetzt ist und wobei die Ringscheibe (27) des Sicherungsrings (23) eine größere Dicke in Axialrichtung aufweist als eine Blechlamelle (5).

8. Asynchronmaschine mit einer Rotor (1) gemäß einem der Ansprüche 1 bis 7.

9. Verfahren zum Fertigen eines Rotors (1) für eine Asynchronmaschine,
**dadurch gekennzeichnet, dass** das Verfahren die folgenden Schritte umfasst:
Bereitstellen eines zylindrischen Rotorgrundkörpers (3) mit darin ausgebildeten parallel zur Längsachse (13) des Rotorgrundkörpers (3) angeordneten Ausnehmungen (15) nahe eines Außenumfangs des Rotorgrundkörpers (3);
Anlagern jeweils eines Sicherungsrings (23) an jede Stirnfläche (20) des Rotorgrundkörpers (3), wobei der Sicherungsring (23) jeweils als Ringscheibe (27) mit einem in Axialrichtung weg von dem Rotorgrundkörper (3) abragenden Rand (25) ausgebildet ist und in der Ringscheibe (27) des Sicherungsrings (23) Ausnehmungen (12) ausgebildet sind;
Ausbilden eines Kurzschlusskäfigs (17) mit einer Mehrzahl von Metallstäben (19), die sich durch die Ausnehmungen (15, 12) in dem Rotorgrundkörper (3) und in den Sicherungsringen (23) erstrecken, und zwei Kurzschlussringen (21) jeweils an Stirnenden (20) des Rotorgrundkörpers (3) angrenzend an einen der Sicherungsringe (23), wobei zumindest die zwei Kurzschlussringe (21) durch ein Metallgussverfahren gegossen werden.

10. Verfahren nach Anspruch 9, wobei die Sicherungsringe (23) bei dem Metallgießen zwischen dem Kurzschlusskäfig (17) und dem Rotorkörper (3) eingegossen werden.
